(19) Europäisches Patentamt

European Patent Office

Office européen des brevets

(11) Veröffentlichungsnummer: **0 242 772**
**B1**

(12) **EUROPÄISCHE PATENTSCHRIFT**

(45) Veröffentlichungstag der Patentschrift:
**13.12.89**

(21) Anmeldenummer: **87105490.4**

(22) Anmeldetag: **14.04.87**

(51) Int. Cl.⁴: **B27K 3/50**

(54) Holzschutzmittel.

(30) Priorität: **22.04.86  DE 3613548**

(43) Veröffentlichungstag der Anmeldung:
**28.10.87 Patentblatt 87/44**

(45) Bekanntmachung des Hinweises auf die Patenterteilung:
**13.12.89 Patentblatt 89/50**

(84) Benannte Vertragsstaaten:
**AT BE CH DE ES FR GB GR IT LI NL SE**

(56) Entgegenhaltungen:
**DE-A- 2 952 377**

**CHEMICAL ABSTRACTS, Band 88, Nr. 3, 16.
Januar 1978, Seite 151, Zusammenfassung Nr. 17128n,
Columbus, Ohio, US; W. SANDERMANN et al.:
"Chemical constitution and fungicidal effectiveness",
& HOLZFORSCHUNG 1977, 31(5), 148-59**

(73) Patentinhaber: **Dr. Wolman GmbH,
Dr.-Wolman-Strasse 31-33, D-7573 Sinzheim(DE)**

(72) Erfinder: **Marx, Hans-Norbert, Mozartweg 8,
D-7580 Buehl-Weitenung(DE)**
Erfinder: **Goettsche, Reimer, Dr., Waldstrasse 27,
D-7570 Baden-Baden 19(DE)**
Erfinder: **Borck, Hans-Volker, Im Kastanienwald 8,
D-7570 Baden-Baden(DE)**

(74) Vertreter: **Mutzbauer, Helmut, Dr. et al,
Carl-Bosch-Strasse 38, D-6700 Ludwigshafen(DE)**

ACTORUM AG

## Beschreibung

Synthetische Pyrethroide, wie z.B. Permethrin, können als Insektizide im Holzschutz verwendet werden. Sie besitzen eine gute Wirksamkeit gegen holzzerstörende Insekten wie Hausbock, Anobien, Lyctiden (vgl. Carter, B.W.P.A. Annual Convention, The use of the Synthetic Pyrethroids as Wood Preservatives). Sie werden in öligen Holzschutzmitteln auf Lösungsmittelbasis mit und ohne Bindemittel mit einer Anwendungskonzentration von ca. 0,05 bis 0,50 % sowohl für den vorbeugenden Schutz als auch zu Bekämpfungsmaßnahmen eingesetzt.

Bei der Anwendung von Holzschutzmitteln gemäß DIN 68 800, die oberflächlich, z.B. durch Streichen, Spritzen, Tauchen oder stationäre Tauch- oder Sprühanlagen aufgebracht werden, besteht die Forderung, daß eine Wirkungstiefe gegen Hausbockeilarven von 4 mm in Kiefernsplintholz nachgewiesen werden muß. Diese Eindringtiefe wird durch Lindane enthaltende Holzschutzmittel erreicht. Mit Holzschutzmitteln, die synthetische Pyrethroide enthalten, erreicht die Wirkungstiefe bei üblichen Auftragsmengen nur 1 bis 2 mm.

Es wurde gefunden, daß Aryloxyalkanole, insbesondere Phenoxyethanol, Phenoxypropanol, Phenoxybutanol als Penetrationshilfsmittel für die synthetischen Pyrethroide wirken und damit eine Wirkungstiefe gegen holzzerstörende Insekten von mindestens 4 mm erreicht wird; gleichzeitig wird - bei Mitverwendung von Fungiziden - auch die Wirkungstiefe gegen holzzerstörende Pilze verbessert.

Erfindungsgemäße Holzschutzmittel enthalten somit z.B. - in gebrauchsfertiger Verdünnung - ca. 0,05 bis 0,50 % eines synthetischen Pyrethroids, ca. 0,5 bis 10 % eines Aryloxyalkanols, und im übrigen z.B. aliphatische oder aromatische Kohlenwasserstoffe, gegebenenfalls Bindemittel sowie weitere Hilfsmittel und evtl. andere Wirkstoffe, die nicht insektizid wirken, andere Insektizide, Farbstoffe und sonstige Zusätze.

Vom Schutzbereich umfaßt sollen sowohl die auf Anwendungsstärke verdünnten Zubereitungen als auch die Konzentrate sein. Die Herstellung erfindungsgemäßer Konzentrate und Verdünnen vor Gebrauch führt ebenso zu erfindungsgemäßen Zubereitungen wie das Zusammengeben der Wirkstoffe, erfindungsgemäßen Zusätzen und Verdünnungsmitteln zu entsprechend wirksamen gebrauchsfertigen Lösungen.

Besonders günstig ist die Herstellung von Konzentraten, die beispielsweise folgende Zusammensetzungen haben können: Bis zu 10 Gew.% mindestens eines Pyrethroids, bis zu 90 Gew.% mindestens eines Aryloxyalkanols sowie gegebenenfalls weitere Wirkstoffe, Verdünnungs- bzw. Lösungsmittel und Hilfsstoffe. Als Aryloxyalkanol sind beispielsweise geeignet Phenoxyethanol, -propanol oder -butanol; als Pyrethroid Verbindungen aus der Gruppe (3-Phenoxy-benzyl(+)cis,trans-3-2,2,2-dichlorvinyl)-2,2-dimethylcyclopropan-1-carboxylat (cis:trans = 1:1); 3-(2,2-Dichlorvinyl-2,2-dimethyl)-cyclopropan-1-carbonsäure-α-cyano-3-3-phenoxybenzylester; 3-(2,2-Dibromvinyl-2,2-dimethyl)-α-cyano-m-phenoxy-benzyl(1R,3R)-cyclopropan-carboxylat; α-Cyano-3-phenoxybenzyl-isopropyl-2,4-chlorphenylacetat. Die Konzentrate können ferner z.B. zusätzlich ein Fungizid enthalten.

Zur Erzielung einer fungiziden Nebenwirkung können z.B. die folgenden Verbindungen in die Holzschutzmittel eingearbeitet werden:

Organozinnverbindungen, wie Tributylzinnoxid und Tributylzinnbenzoat,
TBT-HDO
Methylenbisthiocyanat
Dimethylalkylaminsalze
Chlorierte Phenole, wie Tetra- und Pentachlorphenol
Tetrachlorisophthalsäure-dinitril
N-Cyclohexyl-N-methoxy-2,5-dimethyl-furan-3-carbonsäureamid
N,N-Dimethyl-N′-phenyl-(N-fluormethylthio)-sulfamid
N,N-Dimethyl-N′-tolyl-(N-fluormethylthio)-sulfamid
Benzimidazol-2-carbaminsäure-methylester
2-Thiocyanomethyl-thiobenzothiazol
Kupfernaphthenat
Tridemorph
Kupfer-8-oxychinolin
Alkali- und Metallsalze des N′-Hydroxy-N-cyclohexyl-diazeniumoxids
1-(1′,2′,4′-Triazolyl-1′)-(1-(4′-chlorphenoxy))-3,3-dimethylbutan-2-on
1-(1′,2′,4′-Triazolyl-1′)-(1-(4′-chlorphenoxy))-3,3-dimethylbutan-2-ol
N-(3-(p-tert.-Butylphenyl)-2-methyl-propyl)-cis-2,6-dimethylmorpholin
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
2-N-Octyl-4-isothiazolin-3-on
1,2-Benzisothiazolon-3

1-(4-Chlorphenoxy)-3,3-dimethyl-1-(1H-1,2,4-triazol-1-yl)-butan-2-on
1-(4-Chlorphenoxy)-3,3-dimethyl-1-(1H-1,2,4-triazol-1-yl)-butan-2-ol
Halogenbenzoesäureanilid
Quartäre Ammoniumverbindungen.

Die insektizide Wirksamkeit kann gegebenenfalls durch weitere Insektizide unterstützt werden, wie z.B. durch folgende Verbindungen: Hexachlorcyclohexan
O,O-Diethyl-o-(α-cyanbenzyliden-amino)-thiophosphat
O,O-Diethyl-o-3.5.6-trichlor-2-pyridil-thiono-phosphat
O,O-Diethyl-dithio-phosphoryl-methyl-6-chlorbenoxazolon
O,O-Dimethyl-S-(2-methylamino-2-oxoethyl)-dithiophosphat
O,O-Diethyl-O-(3,5,6-trichlor-2-pyridyl)-thiophosphat
O,O-Dimethyl-S-(N-phthalimido)-methyldithiophosphat
O,O-Diethyl-O-(α-cyanbenzyliden-amino)-thiophosphat
6,7,8,9,10-Hexachlor-1,5,5a,6,9,9a-hexahydro-6,9-methano-2,3,4-benzo dioxothiepin-3-oxyd
2-sek.-Butyl-phenyl-N-methylcarbamat
2-i-Propoxyphenyl-N-methylcarbamat
N-Methyl-1-naphthyl-carbamat
Norbornen-dimethanolhexa-chlorcyclosulfit
1-(4-Chlorphenyl)-3-(2,6-di-fluorbenzoyl)-harnstoff

Zur Wirksamkeitsprüfung wurde sowohl die insektizide als auch die fungizide Wirkung untersucht. Zu diesem Zweck wurden zwei erfindungsgemäße Mischungen und eine Mischung entsprechend dem Stand der Technik hergestellt, die nachstehend als "Vergleich" bezeichnet wird.

Beispiel 1 2,50 % 2,6-Dimethyl-4-tridecylmorpholin
1,50 % Tris-N-cyclohexyl-diazenium-dioxy-aluminium
0.20 % 3-Phenoxybenzyl (+) cis, trans-3-2,2,2-dichlorvinyl)-2,2-dimethylcyclopropan-1-carboxylat (cis:trans 1:1)
2,00 % Phenoxyethanol
93,80 % Mischung aliphatischer und aromatischer Kohlenwasserstoffe im Verhältnis 3:1 (Siedebereich 180-220°C)

Beispiel 2 3,00 % N-Cyclohexyl-N-methoxy-2,5-dimethyl-furan-3-carbonsäureanilid
0,50 % N,N-Dimethyl-N'-phenyl-(N'-fluordichlormethylthio)-sulfamid
0,20 % 3-Phenoxybenzyl(+)cis,trans-3-2,2,2-dichlorvinyl)-2,2-dimethylcyclopropan-1-carboxylat (cis:trans 1:1)
3,00 % Phenoxypropanol
93,20 % Mischung aliphatischer und aromatischer Kohlenwasserstoffe im Verhältnis 3:1 (Siedebereich 180-220°C)

Vergleich 2,50 % 2,6-Dimethyl-4-tridecylmorpholin
1,50 % Tris-N-cyclohexyl-diazenium-dioxy-aluminium
0,20 % 3-Phenoxybenzyl(+)cis,trans-3-2,2,2-dichlorvinyl)-2,2-dimethylcyclopropan-1-carboxylat (cis:trans 1:1)
95,80 % Mischung aliphatischer und aromatischer Kohlenwasserstoffe im Verhältnis 3:1 (Siedebereich 180-220°C)

Die insektizide Prüfung wurde in Anlehnung an DIN EN 46 durchgeführt. Es wurden bei den Kiefernsplintholzklötzchen (Abmessung 50 mm × 25 mm × 15 mm) die beiden Querschnittsflächen (25 mm × 15 mm) mit Gelatine abgedichtet. Dann wurden die zwei 50 mm × 25 mm- und die 50 mm × 15 mm-Flächen mit einer definierten Menge der verdünnten Holzschutzmittel gestrichen. Anschließend lagerten die Klötzchen 4 Wochen lang in einem Klimaraum bei (20±1)°C und (65±5)% relative Luftfeuchtigkeit.

Danach wurde von den behandelten Holzflächen - die Querschnittflächen ausgenommen - von je einem Teil der Klötzchen eine Schicht von 2 mm, 3 mm und 4 mm abgehobelt. Dann wurden an jedes Klötzchen 10 Eilarven des Hausbockkäfers (Hylotrupes bajulus (L.)) gebracht, indem sie in einen geeigneten Spalt eingesetzt wurden, den eine der beiden 50 mm × 21 mm-,50 mm × 19 mm- oder 50 mm × 17 mm-Flächen und ein daran befestigtes Glasplättchen bildeten. Die Larven waren gezwungen, sich von der Oberfläche aus, auf der sie sich befanden, in das Klötzcheninnere einzunagen. Die Tierversuche wurden in einem Klimaraum bei (20±1)°C und (75±5)% relativer Luftfeuchtigkeit durchgeführt. Nach 4 Wochen wurde nach Aufspalten der Klötzchen der Zustand der Larven festgestellt.

Als Kontrolle wurden Klötzchen unbehandelt gelassen und eine dem Stand der Technik entsprechende Mischung auf einen weiteren Satz Klötzchen aufgebracht. Das Ergebnis der insektiziden Prüfung ist auf den folgenden Tabellen angeordnet.

Beispiel 1

| Aufgebrachte Menge an Schutzmittel je m² Holzfläche | Abgeho-belte Schicht/ mm | Versuchs-dauer in Wochen | Anzahl und Zustand der Larven bei Versuchsende | | | |
|---|---|---|---|---|---|---|
| | | | tot | | lebend | |
| | | | nicht eingenagt | eingenagt | eingenagt | nicht gefunden |
| | 2 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| 120 ml entsprechend ca. 100 g | 3 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | 4 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| unbe-handelte Kontroll-proben | | 4 | 1 | 0 | 9 | 0 |
| | | | 0 | 0 | 10 | 0 |
| | | | 0 | 0 | 10 | 0 |
| | | | 0 | 0 | 10 | 0 |
| | | | 0 | 0 | 10 | 0 |
| | | | 0 | 0 | 9 | 1 |

Beispiel 2

| Aufgebrachte Menge an Schutzmittel je m² Holzfläche | Abgeho-belte Schicht/ mm | Versuchs-dauer in Wochen | Anzahl und Zustand der Larven bei Versuchsende | | | |
|---|---|---|---|---|---|---|
| | | | tot | | lebend | |
| | | | nicht eingenagt | eingenagt | eingenagt | nicht gefunden |
| | 2 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| 120 ml entsprechend ca. 100 g | 3 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | 4 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| unbe-handelte Kontroll-proben | | 4 | 0 | 0 | 9 | 1 |
| | | | 1 | 0 | 9 | 0 |
| | | | 0 | 0 | 10 | 0 |
| | | | 0 | 0 | 10 | 0 |
| | | | 0 | 0 | 10 | 0 |
| | | | 0 | 0 | 9 | 1 |

Vergleich

| | Aufgebrachte Menge an Schutzmittel je m² Holzfläche | Abgehobelte Schicht/ mm | Versuchs- dauer in Wochen | Anzahl und Zustand der Larven bei Versuchsende | | | |
|---|---|---|---|---|---|---|---|
| | | | | tot | | lebend | |
| | | | | nicht eingenagt | eingenagt | eingenagt | nicht gefunden |
| | | 2 | 4 | 10 | 0 | 0 | 0 |
| | | | | 10 | 0 | 0 | 0 |
| | | | | 10 | 0 | 0 | 0 |
| | | | | 10 | 0 | 0 | 0 |
| | | | | 10 | 0 | 0 | 0 |
| | | | | 5 | 3 | 2 | 0 |
| | 120 ml entsprechend ca. 100 g | 3 | 4 | 10 | 0 | 0 | 0 |
| | | | | 8 | 0 | 2 | 0 |
| | | | | 4 | 3 | 3 | 0 |
| | | | | 5 | 2 | 3 | 0 |
| | | | | 5 | 1 | 4 | 0 |
| | | | | 6 | 1 | 3 | 0 |
| | | 4 | 4 | 5 | 0 | 5 | 0 |
| | | | | 8 | 0 | 2 | 0 |
| | | | | 9 | 0 | 1 | 0 |
| | | | | 4 | 2 | 4 | 0 |
| | | | | 7 | 2 | 1 | 0 |
| unbe- handelte Kontroll- proben | | | 12 | 0 | 0 | 10 | 0 |
| | | | | 0 | 0 | 10 | 0 |
| | | | | 1 | 0 | 9 | 0 |
| | | | | 0 | 0 | 10 | 0 |
| | | | | 1 | 0 | 9 | 0 |
| | | | | 1 | 1 | 8 | 1 |

Pilzprüfung

Die Untersuchung der angestrichenen und vor dem Pilzversuch abgehobelten Holzklötzchen wurde in Anlehnung an DIN 52176, September 1972, vorgenommen.

Klötzchen aus Kiefernsplintholz (5 cm x 2,5 cm x 1,5 cm; Faserrichtung 5 cm) wurden nach Darren und Wägen an den Hirnflächen durch 5maliges Beschichten abgedeckt.

Auf die so vorbereiteten Klötzchen wurden die Holzschutzmittel gleichmäßig mit 120 ml/m² aufgestrichen. Die gestrichenen Klötzchen lagerten 4 Wochen in einem Klimaraum bei 20°C Lufttemperatur und 65 % relativer Luftfeuchte. Sie wurden dann gewogen, mittels einer Fräse abgehobelt, wobei von allen 4 gestrichenen Seiten entweder je 1 mm oder 2 mm oder 3 mm entfernt wurden und wiederum gewogen. Die abgehobelten Klötzchen wurden nach einem weiteren Tag zusammen mit je einem unbehandelten Vergleichsklötzchen auf Reinkulturen holzzerstörender Basidiomyceten in Kolleschalen eingebaut und sodann dem Pilzangriff 16 Wochen lang in einem Klimaraum mit (22±1)°C Lufttemperatur und (70±5)% relativer Luftfeuchte ausgesetzt. Der Grad der Zerstörung wurde beurteilt, wie sich dies aus den nachstehenden Tabellen ergibt.

6

### Beispiel 1

| Versuchspilz | Aufgestrichene Menge ml/m$^2$ | Dicke der von den Anstrichflächen abgehobelten Schicht mm | Klötzchen nach Pilzversuch |
|---|---|---|---|
| Coniophora puteana | 120 | 1 | ohne Zerstörung |
| | | 2 | ohne Zerstörung |
| | | 3 | ohne Zerstörung |
| Poria monticola | 120 | 1 | ohne Zerstörung |
| | | 2 | ohne Zerstörung |
| | | 3 | ohne Zerstörung |

### Beispiel 2

| Versuchspilz | Aufgestrichene Menge ml/m$^2$ | Dicke der von den Anstrichflächen abgehobelten Schicht mm | Klötzchen nach Pilzversuch |
|---|---|---|---|
| Coniophora puteana | 120 | 1 | ohne Zerstörung |
| | | 2 | ohne Zerstörung |
| | | 3 | ohne Zerstörung |
| Poria monticola | 120 | 1 | ohne Zerstörung |
| | | 2 | ohne Zerstörung |
| | | 3 | 1 mit Zerstörung 4 ohne Zerstörung |

### Vergleich

| Versuchspilz | Aufgestrichene Menge ml/m$^2$ | Dicke der von den Anstrichflächen abgehobelten Schicht mm | Klötzchen nach Pilzversuch |
|---|---|---|---|
| Coniophora puteana | 120 | 1 | ohne Zerstörung |
| | | 2 | 2 mit Zerstörung 3 ohne Zerstörung |
| | | 3 | 4 mit Zerstörung 1 ohne Zerstörung |
| Poria monticola | 120 | 1 | ohne Zerstörung |
| | | 2 | 2 mit Zerstörung 3 ohne Zerstörung |
| | | 3 | 5 mit Zerstörung |

## Patentansprüche

1. Holzschutzmittel, insbesondere gegen holzzerstörende Insekten, die durch oberflächliche Anwendung wie Streichen, Tauchen oder Sprühen aufgebracht werden können und mindestens einen Wirkstoff aus der Gruppe der Pyrethroide enthalten, dadurch gekennzeichnet, daß sie bis zu 10 Gew.-% mindestens eines Pyrethroids, bis zu 90 Gew.-% mindestens eines Aryloxyalkanols mit bis zu 6 Kohlenstoffatomen im Alkanolrest enthalten.

2. Holzschutzmittel nach Anspruch 1, dadurch gekennzeichnet, daß sie gegebenenfalls weitere Wirkstoffe, Verdünnungs- bzw. Lösungsmittel oder Hilfsstoffe enthalten.

3. Holzschutzmittel nach Anspruch 2, enthaltend ein Phenoxyalkanol aus der Gruppe Phenoxyethanol, -propanol oder -butanol, ein Pyrethroid aus der Gruppe (3-Phenoxy-benzyl(+)cis,trans-3-2,2,2,-dichlorvinyl)-2,2-dimethyl-cyclopropan-1-carboxylat; 3-(2,2-Dichlorvinyl-2,2-dimethyl)-cyclopropan-1-carbonsäure-α-cyano-3-3-phenoxybenzylester; 3-(2,2-Dibromvinyl-2,2-dimethyl)-α-cyano-m-phenoxybenzyl(1R,3R)-cyclopropan-carboxylat; α-Cyano-3-phenoxybenzyl-isopropyl-2,4-chlorphenylacetat sowie einen aliphatischen oder aromatischen, gegebenenfalls halogenierten Kohlenwasserstoff.

4. Holzschutzmittel nach Anspruch 3, enthaltend zusätzlich mindestens ein Fungizid.

## Claims

1. A wood preservative, conferring protection in particular against wood-destroying insects, which is appliable by a surface treatment such as brushing, dipping or spraying and contains one or more active substances selected from the group consisting of the pyrethroids, containing up to 10% by weight of one or more pyrethroids and up to 90% by weight of one or more aryloxyalkanols having up to 6 carbon atoms in the alkanol radical.

2. A wood preservative as claimed in claim 1, which may contain further active substances, diluents, solvents or additives.

3. A wood preservative as claimed in claim 2, containing a phenoxyalkanol selected from the group consisting of phenoxyethanol, phenoxypropanol and phenoxybutanol, a pyrethroid selected from the group consisting of 3-phenoxybenzyl(+)cis, trans-3-(2,2-dichlorovinyl)-2,2-dimethylcyclopropane-1-carboxylate, α-cyano-3,3-phenoxybenzyl 3-(2,2-dichlorovinyl)-2,2-dimethylcyclopropane-1-carboxylate, α-cyano-m-phenoxybenzyl 3-(2,2-dibromovinyl)2,2-dimethyl-(1R,3R)-cyclopropanecarboxylate and α-cyano-3-phenoxybenzylisopropyl 2,4-chlorophenylacetate, and also an aliphatic or aromatic hydrocarbon or halohydrocarbon.

4. A wood preservative as claimed in claim 3, containing in addition one or more fungicides.

## Revendications

1. Produits pour la protection des bois, en particulier contre les insectes qui détruisent les bois, pouvant être utilisés par application en surface, par example par enduction, immersion ou pulvérisation, et qui contiennent au moins une substance active du groupe des pyréthroïdes, caractérisés par le fait qu'ils contiennent jusqu'à 10% en poids d'au moins un pyréthroïde et jusqu'à 90% en poids d'au moins un aryloxyalcanol contenant jusqu'à 6 atomes de carbone dans le groupe alcanol.

2. Produits pour la protection des bois selon la revendication 1, caractérisés par le fait qu'ils contiennent le cas échéant d'autres substances actives, des diluants ou solvants ou des produits auxilaires.

3. Produits pour la protection des bois selon la revendication 2, contenant un phénoxyalcanol du groupe constitué par le phénoxyéthanol, le phénoxypropanol ou le phénoxybutanol, un pyréthroïde du groupe formé par le (3-phénoxy-benzyl(+)cis, trans-3-2,2,2-dichlorovinyl)-2,2-diméthyl-cyclopropane-1-carboxylate; le 3-(2,2-dichlorovinyl-2,2-diméthyl)-cyclo-propane-1-carboxylate d'alphacyano-3,3-phénoxy-benzyle; le 3-(2,2-dibromovinyl-2,2-diméthyl)-alpha-cyano-m-phénoxy-benzyl(1R, 3R)-cyclopropane carboxylate; le 2,4-chloro-phénylacétate d'alpha-cyano-3-phénoxybenzyl-isopropyle et un hydraucarbure aliphatique ou aromatique éventuellement halogéné.

4. Produits pour la protection des bois selon la revendication 3, contenant en outre au moins un fongicide.